# EUROPEAN PATENT SPECIFICATION

(11) **EP 1 716 818 B1**
(45) Date of publication and mention of the grant of the patent: **11.03.2009**
(21) Application number: 06252240.4
(22) Date of filing: 26.04.2006
(51) Int. Cl.: A61C 5/02

(54) **Endodontic files and reamers**
Endodontische Feilen und Reibahlen
Limes et alésoirs endodontiques

(30) Priority: 27.04.2005 US 115896
(43) Date of publication of application: 02.11.2006
(73) Proprietor: Cantatore, Giuseppe, Roma (IT); Castellucci, Arnaldo, Florence (IT); Berutti, Elio Vincenzo Giovanni, Torino (IT)
(72) Inventor: Cantatore, Giuseppe, Roma (IT); Castellucci, Arnaldo, Florence (IT); Berutti, Elio Vincenzo Giovanni, Torino (IT)
(74) Representative: Pluckrose, Anthony William

(56) References cited:
- US-A- 5 762 541
- US-A- 6 074 209
- US-A1- 2004 043 357
- US-A1- 2004 229 188

## Description

### (1) FIELD OF THE INVENTION

The present invention relates to the field of endodontic instruments adapted for use in performing root canal therapy on teeth. The files of this invention are characterized by improved lateral as well as torsional flexibility.

### (2) DESCRIPTION OF RELATED ART

A major advancement in dentistry over the past few decades has been in endodontics, that is, the treatment of root canals. Before endodontics became readily available an abscessed tooth was invariably extracted as the only known procedure for alleviating the intense pain associated with an abscessed tooth. Since the advent of endodontics the necessity for extracting a tooth has greatly diminished which has had a dramatic impact on the practice of dentistry and upon the overall improvement of human health. By preserving natural teeth as individual's progress in age their prospects of good appearance and good health are greatly increased.

In root canal therapy, the crown of a diseased, abscessed or infected tooth is opened so to permit the root canal to be cleaned and then filled. Generally the procedure, after opening the crown, is to employ a series of flexible instruments or files which are used to clean out and shape the root canal. The root pulpal material of the tooth is removed. That is, after opening the crown, the endodonist must carefully extract the pulpal material to alleviate and prevent reinfection and at the same time to shape the root canal so as to receive a filler material, such as gutta-percha. For cleaning and reshaping the root canal, the normal procedure is the use of a dental file or, more likely, a series of dental files. Each file is manipulated, that is, rotated and reciprocated in the root canal by the endodonist. This can be done manually or by the insertion of the file within a hand piece by which the file is mechanically rotated with the manipulation of the hand piece being controlled by the endodonist.

Typically, files of increasingly larger diameter are used in sequence to achieve the desired cleaning and shaping. When the canal has been properly cleaned and shaped, it is filled with a filler material which typically comprises a waxy, rubbery compound known as gutta-percha, although other filler materials have been perfected. The invention herein is not concerned with filling the root canal after it is cleaned and prepared, but instead, the present invention is concerned with the configuration of endodontic files having improved lateral and torsional flexibility.

Root canals are seldom straight but on the contrary, the typical root canal is non-linear and can be configured in bends and turns. Further, the interior wall of the root canal is usually irregular. For these reasons, dental files are employed not only to remove pulpal material but to shape the wall of the root canal so that it can be more successfully treated by the deposition of filler material. For these reasons the files used to clean a root canal must be highly flexible to enable the endodonist to clean the root canal to the full depth thereof. In addition to being highly flexible, endodontic files are required to have torsional strength and capability to resist cyclic fatigue. For further background information relating to the subject matter of this invention and specifically relating to dental reamer/files reference may be made to the following previously-issued United States patents.

| **PATENT NUMBER** | **INVENTOR(S)** | **ISSUE DATE** | **TITLE** |
|---|---|---|---|
| 4,443,193 | Roane | 04/17/1984 | Endodontic Instrument |
| 4,536,159 | Roane | 08/20/1985 | Endodontic Instrument |
| 4,934,934 | Arpaio, Jr. et al. | 06/19/1990 | Dental File/Reamer Instrument |
| 5,380,200 | Heath et al. | 01/10/1995 | Endodontic Instrument Of Predetermined Flexibility |
| 5,464,362 | Heath et al. | 11/07/1995 | Endodontic Instrument |
| 5,658,145 | Maillefer et al. | 08/19/1997 | Set Of Instruments For Boring Dental Radicular Canals And Method Therefor |
| 5,692,902 | Aeby | 12/02/1997 | Set Of Instruments For The Boring Of Radicular Dental Canals |
| 5,873,719 | Calas et al. | 02/23/1999 | Dental Reamer |
| 5,897,316 | Buchanan | 04/27/1999 | Endodontic Treatment System |
| 5,921,775 | Buchanan | 07/13/1999 | Endodontic Treatment System |
| 5,975,899 | Badoz et al. | 11/02/1999 | Dental Reamer |
| 6,012,921 | Riitano | 01/11/2000 | Endodontic Systems For The Anatomical, Sectional And Progressive Corono-Apical Preparation Of Root Canals With Three Sets Of Dedicated Instruments |
| 6,074,209 | Johnson | 06/13/2000 | Reduced Torque Endodontic File |
| 6,217,335 | Riitano et al. | 04/17/2001 | Endodontic Systems And Methods For The Anatomicall, Sectional And Progressive Corono-Apical Preparation Of Root Canals With Minimal Apical Intrusion |
| 6,267,592 | Mays | 07/31/2001 | Highly Flexible Instrument For Dental Applications |
| 6,312,261 | Mays | 11/06/2001 | Endodontic Obturator With Removable Carrier And Method Of Use Thereof |
| 6,315,558 | Farzin-Nia et al. | 11/13/2001 | Method Of Manufacturing Superelastic Endodontic Files And Files Made Therefrom |
| 6,390,819 | Riitano | 05/21/2002 | Endodontic Systems And Methods For The Anatomical, Sectional And Progressive Corono-Apical Preparation Of Root Canals With Dedicated Stainless Steel Instruments And Dedicated Nickel/Titanium Instruments |
| 6,419,488 | McSpadden et al. | 07/16/2002 | Endodontic Instrument Having A Chisel Tip |
| 6,514,076 | Bleiweiss et al. | 02/04/2003 | Precipitation Hardenable Stainless Steel Endodontic Instruments And Methods For Manufacturing And Using The Instruments |
| 6,520,774 . | Mays | 02/18/2003 | Highly Flexible Instrument For Medical Applications |
| 6,644,972 | Mays | 11/11/2003 | Endodontic Obturator With Removable Carrier And Method Of Use Thereof |
| 6,746,245 | Riitano et al. | 06/08/2004 | Methods for Cleaning and Shaping Asymmetrical Root Canals in an Anatomical Fashion |
| 2004/0121283 | Mason | 06/24/2004 | Precision Cast Dental Instrument |
| 2002/0090594 | Rittano et al | 07/11/2002 | Methods for Cleaning and Shaping Asymmetrical Root Canals in an Anatomical Fashion |
| 2003/0077553 | Brock | 04/24/2003 | Endodontic Instrument having Notched Cutting Surfaces |
| 2004/0058297 | Danger | 03/02/2004 | Root Canal Instrument |
| 2004/0043357 | Garman | 03/04/2004 | Endodontic Instrument |
| 2004/0023186 | McSpadden | 02/05/2004 | Multi-Tapered Endodontic File |
| 2003/0013067 | Bleiweiss et al | 01/16/2003 | Precipitation Hardenable Stainless Steel Endodontic Instruments and Methods for Manufacturing and using the Instruments |
| Re. 34,439 | Heath | 11/09/1993 | Dental Compactor Instrument |

US 2004/0229188, US-A-6074209 and US-A-5762541 all disclose dental reamers/files having tapered working portions with helical flutes formed by flanges with outer portions of widths greater than the width of the connecting webs connecting them to a common arc portion, but none of the outer portions of such dental instruments are triangular in cross-section. US 20204/0043357 discloses a dental reamer/file which does have flanges each with a triangular outer portion and a reduced width connecting web, but each flange is asymmetrical when considered in cross-section in a plane perpendicular to the length of the dental instrument; therefore greater flexibility will be provided in one rotational sense than in the other rotational sense.

The present invention provides a dental reamer/file as claimed in claim 1.

### BRIEF SUMMARY OF THE INVENTION

The invention is defined by claim 1.

A dental file instrument is the subject of this invention which may also be titled a "rearner." Whether described as a "reamer" or "file," the function is essentially the same-that is to clean and shape the root canal of a tooth to permit the tooth to receive a filler material. The invention will be described as a file with the understanding that it is inclusive of a reamer. The dental file of this invention has an elongated shank having a proximal end portion, a distal end and an intermediate working portion. The external surface of the shank working portion has three continuous, equally spaced, helical flutes formed into a central core of the shank working portion. The spaced apart helical flutes form therebetween three integral spiral flanges, each of which is, in planes perpendicular to the length of the shaft, shaped in part by a triangular outer portion. The triangular outer portion of each spiraled flange has, in cross sections taken perpendicular to the length of the file, a base width of (A). Each of the triangular portions has an apex that forms a cutting/scraping edge. The triangular outer portion of each spiraled flange is integrally connected to the shaft's central core by a reduced width neck portion having a width (B). In the invention herein the width (A) of the triangular outer portion of each spiraled flange is greater than the width (B) of the connecting neck portion. The triangular outer portion of each spiraled flange is therefore rotationally flexible relative to the shaft's inner core portion and the spiraled helical flutes provide longitudinal flexibility. Thus, because of the unique cross-sectional configuration of the shaft working portion both improved lateral and torsional flexibility are obtained.

Further objects and features of the present invention will be apparent to those skilled in the art upon reference to the accompanying drawings and upon reading the following description of the preferred embodiments.

### BRIEF DESCRIPTION OF THE DRAWINGS

Figure 1 is an elevational view of an endodontic file that incorporates the principles of this invention. The endodontic file has a proximal end that receives a handle, or that could be configured to be received in a hand piece by which it is rotated, a distal end and an intermediate working portion. The invention is in the external configuration of the working portion.
Figure 2 is an enlarged fragmentary elevational view taken from Figure 1 showing helical flutes and helical spiraled integral flanges formed on the exterior surface of the file working portion.
Figure 3 is an enlarged cross sectional view of the file working portion of Figures 1 and 2.
In this Figure the helical flutes formed in the external surface of the file working portion of the relatively shallow depth.
Figure 4 is a cross-sectional view as in Figure 3 but wherein the spiraled helical flutes are of greater depth. By dotted outline bending of the narrow neck portions of the spiraled flanges are illustrated to show the file's torsional flexibility.
Figure 5 is a cross sectional view as in Figure 3 and 4 but showing an embodiment in which the helical flutes are of greater depth and that therefore provide greater torsional flexibility. In this view the outer ends of the triangular shaped spiraled flanges form an acute angle.
Figure 6 is a view of Figures 3 through 5 showing the arrangement wherein the outer ends of each of the flange portions is bound by a 90 degree angle.
Figure 7 shows the embodiment as in Figure 6 but wherein the outer ends of the triangular shaped spiral flanges form an obtuse angle.

### DETAILED DESCRIPTION OF THE INVENTION

The invention will be described by reference to the drawings using numbers assigned to elements according to the following table:

| | | | |
|---|---|---|---|
| 10 | dental file | 24 | cylindrical portion of 12 |
| 12 | shank | 26A, B & C | spiral flanges neck portion |
| 14 | proximal portion | 28 | central core |
| 16 | distal end | 30 | flange working portion |
| 18 | working portion | 32 | flange outer surfaces |
| 20 | handle | 34 | tip-spiral edge |
| 22A, B, & C | helical flutes | | |

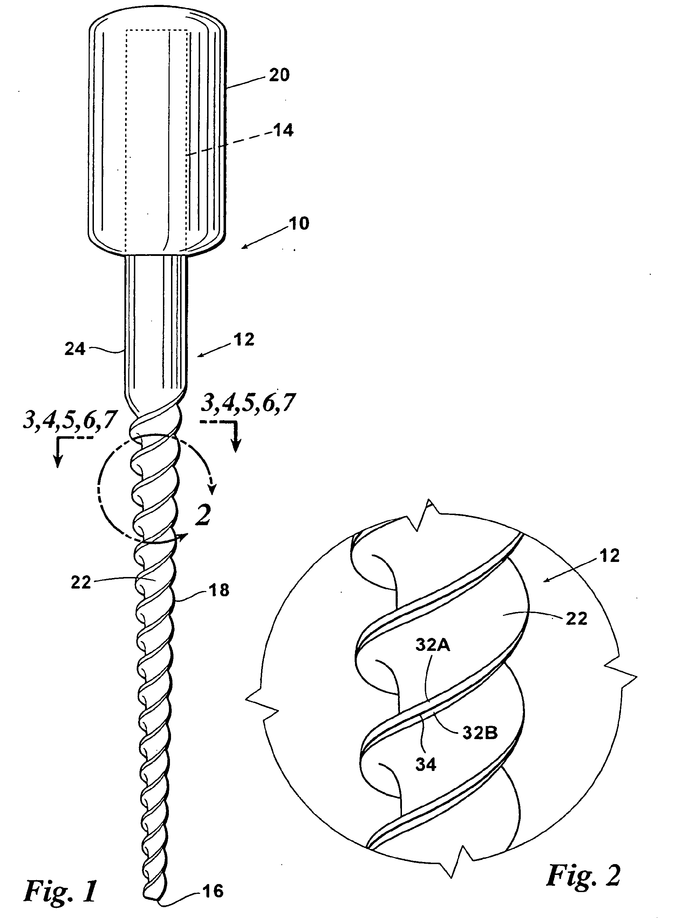

Referring first to Figures 1 and 2 the improved dental file of this invention is indicated by the numeral 10. The file includes a shank, generally indicated by 12, which includes a proximal portion 14, a distal end 16 and an intermediate working portion 18. Formed on proximal portion 14 is a handle 20 that is typically held between the thumb and forefinger of the practitioner by which the file is rotated.

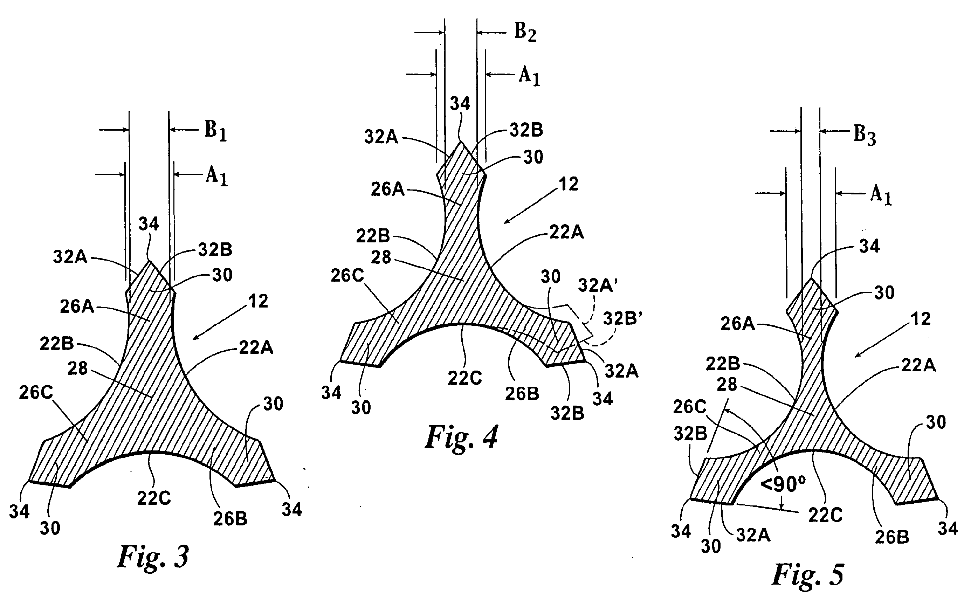

Formed on the working portion 18 of the digital file is at least one helical flute 22. In the preferred embodiment there are a plurality of helical flutes 22. In the illustrations of the invention in Figures 3-7 there are three helical flutes 22A, 22B and 22C. While the number of flutes can vary between one and a higher number, typically the preferred number of flutes is illustrated in Figures 3 through 7, that is, there are three helical flutes. The flutes start at a position that is spaced from handle 20 and extends to distal end 16. In the illustrated arrangement, the shank 12 has a cylindrical portion 24 that partially extends within handle 20. As seen in Figures 3 through 7 that are perpendicular to the longitudinal axis of shank 12, three spiral flutes 22A, 22B and 22C formed on the exterior of the shank three spiral flanges 26A, 26B and 26C. Flanges 26A, 26B and 26C are integrally formed with and extend from shank central core portion 28.

Each of integral flange portions 26A through 26C has adjacent its outer end a flange working portion 30. In the embodiment of Figures 3 through 7, each flange working portion 30 is of triangular configuration providing planar surfaces 32A and 32B that intersect to form tip 34. Tip 34 defines a spiraled cutting, scraping or abrading edge. That is, edge 34 of each of the flange working portions 30 forms, in a cross-section of each of the flange working portions 18, a tip 34 but this tip forms a spiraled cutting or shaping edge 34 as seen in Figure 2.

Each of the flange working portions 30 has a width A as illustrated in Figures 3 through 5. Each flange working portion 30 is connected to the shank central core 28 by a flange neck portion 26. An important aspect of the invention is the provision that the width A of each flange working portion 30 is greater than the width B of the flange neck portion 26. These reduced width neck portions 26A, 26B and 26C permit a degree of flexibility of each flange working portion 30 compared to the central core portion 28.

As seen in Figures 3, 4 and 5, the depth of each of the spiral flutes 22A through 22C determines the width B of the neck portion 26. As illustrated in Figure 3, the width B, of each of the neck portions 26A, 26B and 26C is equal, predicated upon the depth of the flutes 22A, 22B and 22C being equal. By varying the depth of the helical flutes 22, the width of the neck portions 26 of each of the helical flutes is varied to thereby dramatically vary the rotational flexibility of the working portion of each spiraled flange relative to core portion 28.

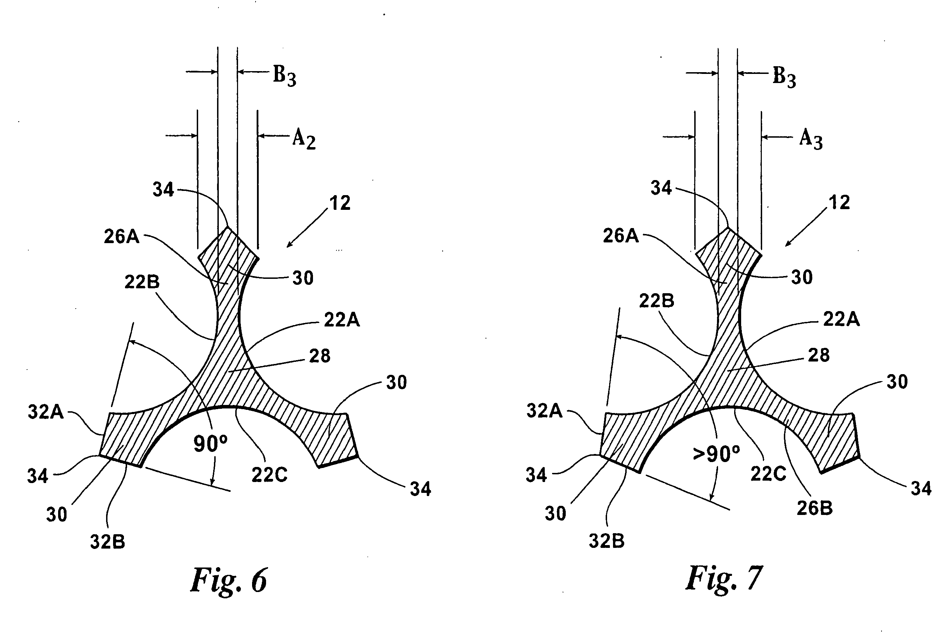

In Figures 3 through 5 each of the flange working portions 30 is similar in its geometrical configuration. That is, the surfaces 32A and 32B of each working portion 30 are the same irrespective of the variation in the flute depth and therefore the variation in the width B and of the neck portions 26A of the three illustrated embodiments. In each of Figures 3, 4 and 5, the width A remains substantially equal while the width B varies considerably. In Figures 3, 4 and 5 flange outer surfaces 32A and 32B meet at an acute angle, that is, less than 90°. Figure 6 shows the arrangement wherein the surfaces 32A and 32B meet at apex 34 at a right angle. Figure 7 shows the embodiment wherein the surfaces 32A and 32B meet at apex 34 forming an obtuse angle, that is, greater than 90°. When the flange working portion 30 is defined by an acute angle as in Figures 3, 4 and 5, the apex 34 provides a sharper scraping edge so that the file, when rotated in a root canal has a greater tendency to dig into the surface of the wall of the root canal and therefore to cut away or remove portions of the wall as the file is rotated. On the other hand, when the surfaces 32A and 32B meet at an obtuse angle as in Figure 7, the cutting action is reduced. Thus, the cutting or abrading action of the files as they are rotated is controllable by the design of shape of the flange working portions.

Figure 4 illustrates the flexibility of the endodontic file of this invention. In this Figure one of the flange working portions 30 is shown in dotted outline as it would be slightly deflected when the file is rotated clockwise and the tip or spiral end 34 engages an inwardly protruding irregularity in the root canal (not shown) in which the file is situated. This flexibility decreases the possibility of the file becoming rotationally locked as the file is rotated in the process of cleaning or shaping a root canal.

## Claims

1. A dental reamer/file instrument (10) comprising:
an elongated shank (12) having a proximal end portion (14), a distal end (16) and a tapered working portion (18) extending from said proximal portion (14) to said distal end (16), wherein:
the external surface of said shank working portion (18) is defined in part by at least one continuous helical flute (22) formed into a central core portion (28) of said shank working portion to provide a spiral flange (26) for each helical flute, each spiral flange (26) when viewed in cross-section in a plane perpendicular to a length of said elongated shank (12) being defined in part by a triangular outer portion (30) having a base width of "A", an apex (34) of each triangular outer portion (30) forming a cutting/scraping edge, each said triangular outer portion (3) being integrally connected to said central core portion (28) by a reduced width flexible neck portion (26) of width "B"; and wherein:
"A" is greater than "B" and the reduced width flexible neck portions (26) give said triangular outer portions rotational flexibility relative to said shaft central core portion (28); **characterised in that**:
each flange (26), when viewed in cross-section in a plane perpendicular to the length of the shaft, is symmetrical about a line passing from a centre of the central core portion (28) through the apex (34) of the triangular outer portion (30) of the flange (26).

2. A dental reamer/file instrument (10) as claimed in claim 1 comprising three continuous helical flutes (22) equally spaced about a circumference of the shank working portion (18).

3. A dental reamer/file instrument according to claim 1 or claim 2, wherein the torsional flexibility of the reamer/file instrument is dependent on the depth of the flutes, a greater torsional flexibility being provided by a greater flute depth.

4. A dental reamer/file according to any one of claims 1 to 3 wherein said triangular outer portion (30) forms a right angle apex (34).

5. A dental reamer/file according to claims 1 to 3 wherein said triangular outer portion (30) forms an acute angle apex (34).

6. A dental reamer/file according to any one of claims 1 to 3 wherein said triangular outer portion (30) forms an obtuse angle apex (34).

## Patentansprüche

1. Zahn-Reibahlen-/Feilen-Instrument (10), umfassend:
einen verlängerten Schaft (12), welcher einen proximalen Endabschnitt (14), ein distales Ende (16) und einen sich verjüngenden Arbeitsabschnitt (18), welcher sich von dem proximalen Abschnitt (14) zu dem distalen Ende (16) erstreckt, aufweist, wobei:
die Außenoberfläche des Schaft-Arbeitsabschnittes (18) zum Teil durch wenigstens eine kontinuierliche, helikale Kehle (22) definiert ist, welche in einem mittigen Kernabschnitt (28) des Schaft-Arbeitsabschnittes gebildet ist, um einen spiralförmigen Flansch (26) für jede helikale Kehle bereitzustellen, wobei jeder spiralförmige Flansch (26), wenn in einem Querschnitt in einer Ebene senkrecht zu einer Länge des verlängerten Schaftes (12) betrachtet, zum Teil durch einen dreieckigen äußeren Abschnitt (30) definiert ist, welcher eine Basis-Breite "A" aufweist, wobei ein Scheitel (34) von jedem dreieckigen äußeren Abschnitt (30) eine Schneid-/Schab-Kante bildet, wobei jeder der dreieckigen äußeren Abschnitte (3) integral mit dem mittigen Kernabschnitt (28) verbunden ist durch einen flexiblen Halsabschnitt (26) reduzierter Breite von der Breite "B"; und wobei:
"A" größer als "B" ist und die flexiblen Halsabschnitte (26) reduzierter Breite den dreieckigen äußeren Abschnitten (26) Drehflexibilität relativ zu dem mittigen Kernabschnitt (28) des Schaftes geben; **dadurch gekennzeichnet, dass**:
jeder Flansch (26), wenn in einem Querschnitt in einer Ebene senkrecht zu der Länge des Schaftes betrachtet, symmetrisch zu einer Linie ist, welche von einer Mitte des mittigen Kernabschnitts (28) durch den Scheitel (34) des dreieckigen äußeren Abschnitts (30) des Flansches (26) geht.

2. Zahn-Reibahlen-/Feilen-Instrument (10) nach Anspruch 1, umfassend drei kontinuierliche helikale Kehlen (22), welche gleichmäßig über einen Umfang des Schaft-Arbeitsabschnittes (18) beabstandet sind.

3. Zahn-Reibahlen-/Feilen-Instrument nach Anspruch 1 oder 2, wobei die Torsionsflexibilität des Zahn-Reibahlen-/Feilen-Instruments von der Tiefe der Kehlen abhängt, wobei eine größere Torsionsflexibilität durch eine größere Kehlentiefe bereitgestellt wird.

4. Zahn-Reibahlen-/Feilen-Instrument nach einem der Ansprüche 1 bis 3, wobei der dreieckige äußere Abschnitt (30) einen rechtwinkligen Scheitel (34) bildet.

5. Zahn-Reibahlen-/Feilen-Instrument nach einem der Ansprüche 1 bis 3, wobei der dreieckige äußere Abschnitt (30) einen spitzwinkligen Scheitel (34) bildet.

6. Zähn-Reibahlen-/Feilen-Instrument nach einem der Ansprüche 1 bis 3, wobei der dreieckige äußere Abschnitt (30) einen stumpfwinkligen Scheitel (34) bildet.

## Revendications

1. Instrument dentaire formant lime/alésoir (10) comprenant:
un fût oblong (12) ayant une portion d'extrémité proximale (14), une extrémité distale (16) et une portion travaillante conique (18) s'étendant depuis ladite portion proximale (14) à ladite extrémité distale (16), où:
la surface externe de ladite portion travaillante (18) du fût est définie en partie par au moins une denture hélicoïdale continue (22) formée dans une portion de noyau centrale (28) de ladite portion travaillante du fût pour réaliser une bride en spirale (26) pour chaque denture hélicoïdale, chaque bride en spirale (26), vue en section transversale dans un plan perpendiculaire à une longueur dudit fût oblong (12) étant définie en partie par une portion extérieure triangulaire (30) ayant une largeur de base de "A", un sommet (34) de chaque portion extérieure triangulaire (30) formant un bord de coupe/raclage, chaque portion extérieure triangulaire précitée (3) étant intégralement reliée à ladite portion de noyau centrale (28) par une portion de col flexible (26) d'une largeur réduite de la largeur "B"; et où:
"A" est plus grand que "B", et les portions de col flexible de largeur réduite (26) confèrent auxdites portions extérieures triangulaires une flexibilité rotationnelle relativement à ladite portion de noyau centrale (28) de l'arbre; **caractérisé en ce que**:
chaque bride (26), vue en section transversale dans un plan perpendiculaire à la longueur de l'arbre, est symétrique autour d'une ligne passant d'un centre de la portion de noyau central (28) à travers le sommet (34) de la portion extérieure triangulaire (30) de la bride (26).

2. Instrument dentaire formant lime/alésoir (10) selon la revendication 1, comprenant trois dentures hélicoïdales continues (22) espacées uniformément autour d'une circonférence de la portion travaillante de fût (18).

3. Instrument dentaire formant lime/alésoir selon la revendication 1 ou la revendication 2, où la flexibilité torsionnelle de l'instrument formant lime/alésoir dépend de la profondeur des dentures, une plus grande flexibilité torsionnelle étant obtenue par une plus grande profondeur de denture.

4. Lime/alésoir dentaire selon l'une quelconque des revendications 1 à 3, où ladite portion extérieure triangulaire (30) forme un sommet d'angle droit (34).

5. Lime/alésoir dentaire selon les revendications 1 à 3, où ladite portion extérieure triangulaire (30) forme un sommet d'angle aigu (34).

6. Lime/alésoir dentaire selon l'une quelconque des revendications 1 à 3, où ladite portion extérieure triangulaire (30) forme un sommet d'angle obtus (34).
